# EUROPEAN PATENT APPLICATION

(11) **EP 4 391 107 A1**
(43) Date of publication of application: **26.06.2024**
(21) Application number: 22857088.3
(22) Date of filing: 29.03.2022
(51) Int. Cl.: H01M 4/133, H01M 4/36, H01M 4/587, H01M 4/62

(54) **LITHIUM ION SECONDARY BATTERY**

(30) Priority: 19.08.2021 JP 2021133832
(71) Applicant: Vehicle Energy Japan Inc., Ibaraki 312-8505 (JP)
(72) Inventor: INABA, Akira, Hitachinaka-shi, Ibaraki 312-8505 (JP); TACHIKAWA, Yusuke, Hitachinaka-shi, Ibaraki 312-8505 (JP); TOOYAMA, Tatsuya, Hitachinaka-shi, Ibaraki 312-8505 (JP); KUROKI, Yasutaka, Hitachinaka-shi, Ibaraki 312-8505 (JP); MIKI,Takeshi, Hitachinaka-shi, Ibaraki 312-8505 (JP)
(74) Representative: Strehl Schübel-Hopf & Partner
(86) International application number: PCT/JP2022/015299
(87) International publication number: WO 2023/021781

(57) **Abstract**

An object of the present invention is to provide a lithium ion secondary battery having a high power over a wide range of low SOC to high SOC while securing a battery capacity, and having a good storage property (a capacity retention rate). One aspect of the present embodiment includes a lithium ion secondary battery which includes: a positive electrode; and a negative electrode, in which the negative electrode includes a current collector and a negative electrode active material layer disposed on at least one side of the current collector, the negative electrode active material layer includes a negative electrode active material including graphite particles (A) and graphite particles (B) on which amorphous carbon fine particles are supported, and the number of the amorphous carbon fine particles per unit area is 0.4 pieces/µm² or more in the graphite particles (B) on which the amorphous carbon fine particles are supported.

## Description

### Technical Field

The present invention relates to a lithium ion secondary battery.

### Background Art

In the automobile industry, fuel efficiency regulations and environmental regulations are being strengthened in each country and region. In order to comply with these regulations, technological development of electric vehicles that do not emit carbon dioxide and that use batteries as a power source and fuel cell vehicles that use hydrogen as a fuel source are attracting attention. However, there are problems with the electric vehicles, such as insufficient charging infrastructure and a longer time required for charging compared to refueling, and there are problems with the fuel cell vehicles, such as a high cost required for infrastructure improvement of hydrogen stations, and a high cost of fuel cells. Therefore, PHEVs (Plug-in Hybrid Electric Vehicles) and HEVs (Hybrid Electric Vehicles), which use both an internal combustion engine and a battery as power sources and emit less carbon dioxide, are being strong candidates for meeting the fuel efficiency regulations and the environmental regulations.

A lithium ion secondary battery is commonly used in the PHEVs and HEVs. Patent Literature 1 discloses a positive electrode active material including lithium nickel manganese tungsten composite oxide particles having a hexagonal layered structure, the positive electrode active material enabling a high capacity and high output of a lithium ion secondary battery. Patent Literature 2 discloses containing coated graphite particles in which the surface of graphite particles is coated with a coating layer containing a first amorphous carbon and a second amorphous carbon as a negative electrode active material constituting a non-aqueous electrolyte secondary battery, particles of the second amorphous carbon being dispersed inside a layer of the first amorphous carbon, the first amorphous carbon being a fired product of pitch, and the second amorphous carbon being a carbon black, etc.

### Citation List

### Patent Literature

[Patent Literature 1] Japanese Patent Application Laid-Open No. 2020-123494
[Patent Literature 2] Japanese Patent Application Laid-Open No. 2018-163833

### Summary of Invention

### Technical Problem

In the PHEVs or HEVs, there is a demand for a lithium ion secondary battery that has an adequate capacity retention rate and has a low resistivity increase even in regions where the charge rate (State of Charge, SOC) is low, and that is able to supply a stable power. The techniques described in Patent Literatures 1 and 2 are not intended to improve the output in the low SOC range, and a technique for supplying a stable output is required.

The present invention has been made in view of the above-described problems, and an object of the present invention is to provide a lithium ion secondary battery having a high power over a wide range of low SOC to high SOC while securing a battery capacity, and having a good storage property (a capacity retention rate).

### Solution to Problem

One aspect of the present embodiment is a lithium ion secondary battery which includes: a positive electrode; and a negative electrode, in which the negative electrode includes a current collector and a negative electrode active material layer disposed on at least one side of the current collector, the negative electrode active material layer includes a negative electrode active material including graphite particles (A) and graphite particles (B) on which amorphous carbon fine particles are supported, and the number of the amorphous carbon fine particles per unit area is 0.4 pieces/µm² or more in the graphite particles (B) on which the amorphous carbon fine particles are supported.

Another aspect of the present embodiment is a lithium ion secondary battery which includes: a positive electrode; and a negative electrode, in which the negative electrode includes a current collector and a negative electrode active material layer disposed on at least one side of the current collector, the negative electrode active material layer includes a negative electrode active material, a binder holding the negative electrode active material, and a negative electrode additive including a copper oxide, and the negative electrode active material includes a negative electrode active material containing an amorphous carbon.

The present specification includes the disclosure of Japanese Patent Application No. 2021-133832, which is the basis of priority of the present application.

### Advantageous Effects of Invention

According to the present invention, it is possible to provide a lithium ion secondary battery having a high power in a wide range of low SOC to high SOC while securing a battery capacity, and having a good storage property.

### Brief Description of Drawings

Figure 1 is an external perspective view of a lithium ion secondary battery.
Figure 2 is an exploded perspective view of a lithium ion secondary battery.
Figure 3 is an exploded perspective view illustrating a state in which a part of a wound group is unfolded.
Figure 4 is a conceptual diagram showing a mixed state of graphite particles (A) and graphite particles (B) on which amorphous carbon fine particles are supported in a negative electrode active material layer.

### Description of Embodiments

Hereinafter, embodiments will be described with reference to the drawings as appropriate. The following description shows specific examples of the contents of the present invention, and the present invention is not limited to these descriptions, and various changes and modifications can be made by those skilled in the art within the scope of the technical idea disclosed in the present specification. In addition, in all the drawings for explaining the present invention, those having the same function are denoted by the same reference numerals, and repeated explanations thereof may be omitted. Also, the dimensional ratios in the drawings may be different from the actual ratios for convenience of explanation, and some members may be omitted from the drawings. In addition, in the present application, a numerical range represented by the symbol "-" includes the numerical values described before and after the symbol "-" as lower and upper limits, respectively.

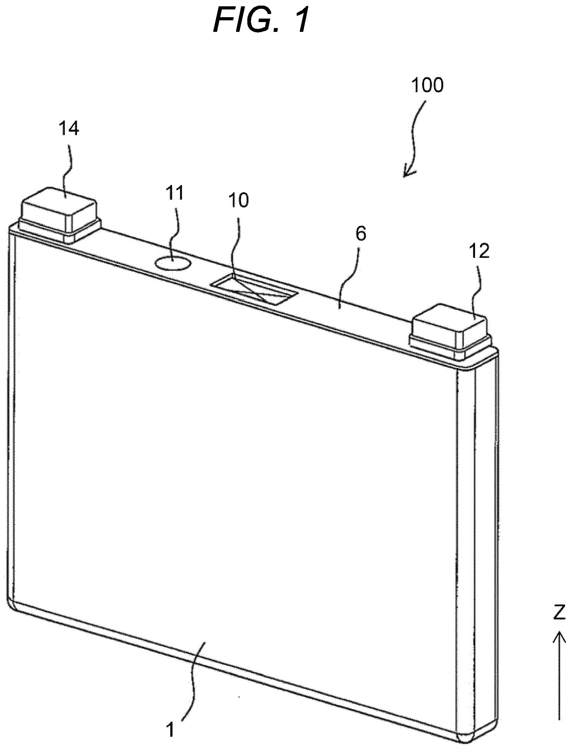

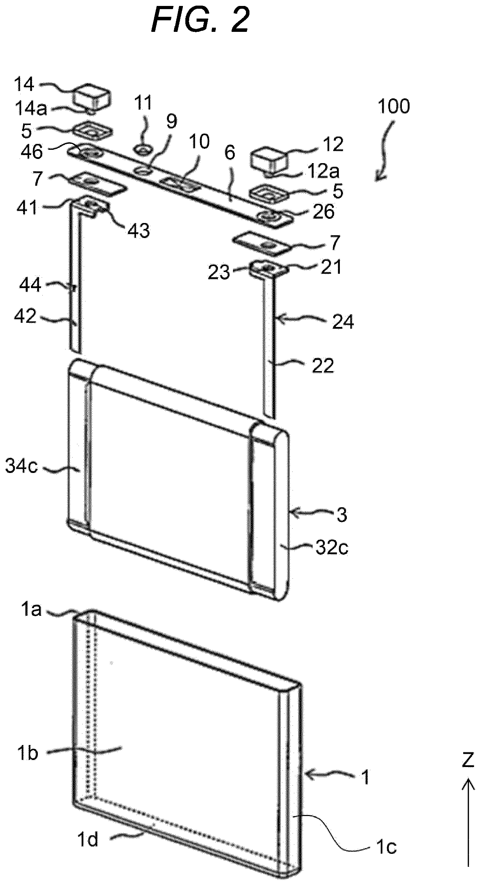

A lithium ion secondary battery 100 according to an embodiment shown in Figures 1 and 2 includes a battery can 1 and a battery lid 6. The battery can 1 has a rectangular bottom surface 1d, a side surface including a pair of opposed wide side surface 1b having a relatively large area and a pair of opposed narrow side surface 1c having a relatively small area, the side surface rising from the bottom surface 1d, and an opening 1a opened upward at an upper end of the wide side surface 1b and the narrow side surface 1c. Here, "upward" means the Z direction in Figures 1 and 2.

The opening 1a of the battery can 1 is sealed by the battery lid 6. The battery lid 6 has a substantially rectangular flat plate shape and is welded so as to close the opening 1a of the battery can 1 to seal the battery can 1.

The battery lid 6 is integrally provided with a gas discharge valve 10. When the pressure in the battery can 1 increases, the gas discharge valve 10 is cleaved and the gas is discharged from the inside of the battery can 1, and the pressure in the battery can 1 decreases. This ensures a safety of the lithium ion secondary battery 100.

A liquid injection port 9 for injecting an electrolytic solution into the battery can 1 is formed in the battery lid 6. The liquid injection port 9 is sealed by a liquid injection plug 11 after the electrolytic solution is injected into the battery can 1. The liquid injection plug 11 is joined to the battery lid 6 by laser welding to seal the liquid injection port 9, thereby sealing the lithium ion secondary battery 100 hermetically.

Further, a positive electrode side through hole 46 and a negative electrode side through hole 26 are formed in the battery lid 6.

A positive external terminal 14 and a negative external terminal 12 are provided above the battery lid 6. A positive collector plate 44 and a negative collector plate 24 are provided below the battery lid 6 and inside the battery can 1.

Examples of the material for forming the positive external terminal 14 and the positive collector plate 44 include an aluminum alloy, and examples of the material for forming the negative external terminal 12 and the negative collector plate 24 include a copper alloy.

The positive external terminal 14 and the negative external terminal 12 each have a welded joint portion to which a bus bar or the like is welded. The weld joint has a cuboidal block shape that protrudes upward from the battery lid 6. The lower surface of the welded joint faces the surface of the battery lid 6, and the upper surface of the welded joint is positioned at a predetermined height and is substantially parallel to the battery lid 6.

The positive collector plate 44 includes a rectangular plate-shaped positive current collector plate base 41 opposed to the lower surface of the battery lid 6, and a positive connection end 42 extending from the side end of the positive current collector plate base 41 toward the bottom surface 1d side along the wide side surface 1b of the battery can 1. Similarly, the negative collector plate 24 includes a rectangular plate-shaped negative current collector plate base 21 opposed to the lower surface of the battery lid 6, and a negative connection end 22 extending from the side end of the negative current collector plate base 21 toward the bottom surface 1d along the wide side surface 1b of the battery can 1. A positive electrode side opening 43 and a negative electrode side opening 23 are formed in the positive current collector plate base 41 and the negative current collector plate base 21, respectively.

The positive connection part 14a and the negative connection part 12a are provided so as to protrude from the lower surfaces of the positive external terminal 14 and the negative external terminal 12, respectively. The positive connection part 14a and the negative connection part 12a are formed integrally with the positive external terminal 14 and the negative external terminal 12, respectively.

The positive connection part 14a has a cylindrical shape that can be inserted into the positive electrode side through hole 46 of the battery lid 6 and the positive electrode side opening 43 of the positive current collector plate base 41. Similarly, the negative connection part 12a has a cylindrical shape that can be inserted into the negative electrode side through hole 26 of the battery lid 6 and the negative electrode side opening 23 of the negative current collector plate base 21. The positive connection part 14a passes through the positive electrode side through hole 46 of the battery lid 6 and the positive electrode side opening 43 of the positive current collector plate base 41, and passes through the battery lid 6 and the positive current collector plate base 41. The positive external terminal 14 and the positive collector plate 44 are electrically connected to each other via the positive connection part 14a, and are fixed to the battery lid 6. Similarly, the negative connection part 12a passes through the negative electrode side through hole 26 of the battery lid 6 and the negative electrode side opening 23 of the negative current collector plate base 21, and passes through the battery lid 6 and the negative current collector plate base 21. The negative external terminal 12 and the negative collector plate 24 are electrically connected to each other via the negative connection part 12a, and are fixed to the battery lid 6.

The positive external terminal 14 is electrically connected to a wound group 3, which will be described later, via the positive connection part 14a and the positive collector plate 44. Similarly, the negative external terminal 12 is electrically connected to the wound group 3 via the negative connection part 12a and the negative collector plate 24. When the lithium ion secondary battery 100 is charged, electricity is supplied from an external power source to the wound group 3 via the positive external terminal 14, the positive connection part 14a and the positive collector plate 44, and the negative external terminal 12, the negative connection part 12a and the negative collector plate 24. When the lithium ion secondary battery 100 is discharged, electricity is supplied from the wound group 3 to external loads via the positive external terminal 14, the positive connection part 14a and the positive collector plate 44, and the negative external terminal 12, the negative connection part 12a and the negative collector plate 24.

In order to electrically insulate the positive collector plate 44 and the negative collector plate 24, the positive external terminal 14, and the negative external terminal 12 from the battery lid 6, respectively, a gasket 5 is provided between each of the positive external terminal 14 and the negative external terminal 12 and the battery lid 6, and an insulation plate 7 is provided between each of the positive collector plate 44 and the negative collector plate 24 and the battery lid 6. Examples of materials for the insulation plate 7 and the gasket 5 include insulating resin materials such as polybutylene terephthalate, polyphenylene sulfide, and perfluoroalkoxy fluororesin.

An electrolytic solution and a wound group 3 are accommodated in the battery can 1.

The electrolytic solution is injected into the battery can 1 through the liquid injection port 9. As the electrolytic solution, for example, a non-aqueous electrolytic solution in which a lithium salt such as lithium hexafluorophosphate (LiPF₆) is dissolved in a carbonate-based organic solvent such as ethylene carbonate can be used.

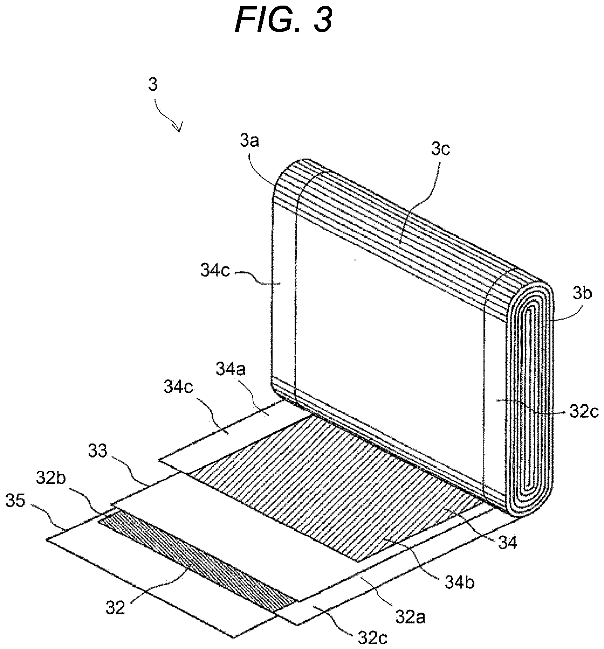

As shown in Figure 3, the wound group 3 includes a negative electrode 32, a positive electrode 34, and two separators 33 and 35. The separator 35, the negative electrode 32, the separator 33 and the positive electrode 34 are stacked in this order and wound in a flat shape. The separator 35 is located on the outermost periphery of the wound group 3, and the negative electrode 32 is located on the inner side thereof. The two separators 33 and 35 electrically insulate the positive electrode 34 and the negative electrode 32 from each other.

The wound group 3 has a pair of opposed end face 3a, 3b perpendicular to the winding shaft and a side face 3c between the pair of end face 3a, 3b. The side surface 3c has a pair of opposing curved portions each having a semicircular cross section and a flat portion continuously formed between the pair of curved portions. The wound group 3 is arranged in the battery can 1 such that the flat portion of the side surface 3c and the wide side surface 1b of the battery can 1 are substantially parallel.

The positive electrode 34 includes a positive current collector 34a and positive electrode mixture layers 34b formed on at least one side, preferably both sides of the positive current collector 34a.

The positive current collector 34a is made of any material that is highly conductive and does not alloy with lithium ions. The positive current collector 34a may have a plate-like (sheet-like) shape. For example, an aluminum foil can be used as the positive current collector 34a. At one end of the positive current collector 34a, a portion 34c not covered with the positive electrode mixture layer 34b (hereinafter the portion 34c is referred to as "positive current collector exposed portion") is provided. The positive current collector exposed portion 34c is provided on the end face 3a of the wound group 3 and its vicinity. The positive current collector exposed portion 34c faces and is electrically connected to the positive connection end 42 of the positive current collector plate 44. In the present invention, the positive electrode mixture layer and the negative electrode mixture layer are also referred to as a positive electrode active material layer and a negative electrode active material layer, respectively.

### <Positive Electrode>

The positive electrode 34 has a positive electrode mixture layer 34b on at least one side, preferably both sides of a positive electrode foil that is a positive current collector 34a, and a positive current collector exposed portion 34c to which the positive electrode active material mixture is not applied is provided at one end in the width direction of the positive electrode foil. In addition, in the present invention, a positive electrode is also described as a positive electrode. Moreover, in the description of the positive electrode, the positive electrode current collector is also simply referred to as a current collector.

The positive electrode 34 has a positive electrode mixture layer 34b formed on at least one side, preferably both sides of a positive current collector 34a. The positive electrode material mixture 34b contains a positive electrode active material. As the positive electrode active material, for example, a composite oxide of nickel, cobalt and manganese can be used. In one preferred embodiment, a ternary lithium-containing composite oxide represented by the following general composition formula (1) is used as the positive electrode active material.

Li_{1+X}M^{A}O₂ (1)

(Wherein, X satisfies -0.15 ≦ X ≦ 0.15, and M^{A} represents an element group containing at least one selected from the group consisting of Mn and Al, Ni and Co.)

The ternary lithium-containing composite oxide represented by the general composition formula (1) has a high thermal stability and a stability in a high potential state, and a lithium ion secondary battery safety and various battery characteristics can be enhanced by applying the oxide.

The positive electrode mixture layer 34b may further contain at least one, preferably both of a binder and a conductive agent.

Examples of binders include polyvinylidene fluoride (PVdF), polytetrafluoroethylene (PTFE), polyethylene, polystyrene, polybutadiene, polyacrylonitrile, polyvinyl fluoride, polypropylene fluoride, polychloroprene fluoride, butyl rubber, nitrile rubber, styrene-butadiene rubber (SBR), polysulfide rubber, nitrocellulose, cyanoethyl cellulose, various latexes, acrylic resins, or mixtures thereof can be used.

As the conductive agent, a carbon-based material can be used. The carbon-based material may be crystalline carbon, amorphous carbon, or mixtures thereof. Examples of the crystalline carbon include artificial graphite, natural graphite (e.g., scaly graphite), or mixtures thereof. Examples of the amorphous carbon include carbon black (e.g., acetylene black, Ketjen black, channel black, furnace black, lamp black, thermal black, or mixtures thereof).

The positive electrode 34 can be formed, for example, as follows. The positive electrode active material, and optionally the binder and the conductive agent are dispersed in a solvent (e.g., N-methyl-2-pyrrolidone (NMP), water) to prepare a paste-like or slurry-like positive electrode mixture composition. The positive electrode mixture composition is applied to the surface (one side or both sides) of the positive current collector 34a and dried, and subjected to calendering as necessary to form the positive electrode mixture layer 34b. Thereby, the positive electrode 34 is obtained. However, the positive electrode is not limited to those manufactured by the above-described manufacturing method, and may be manufactured by another method.

### <Negative Electrode>

In one aspect of the present embodiment, a negative electrode included in the lithium ion secondary battery includes a current collector and a negative electrode active material layer provided on at least one surface of the current collector, in which the negative electrode active material layer includes a negative electrode active material including graphite particles (A); and graphite particles (B) on which amorphous carbon fine particles are supported, and the graphite particles (B) on which the amorphous carbon fine particles are supported have the number of amorphous carbon fine particles per unit area of 0.4 pieces/µm² or more.

In another aspect of the present embodiment, a negative electrode included in a lithium ion secondary battery includes a current collector and a negative electrode active material layer provided on at least one surface of the current collector, in which the negative electrode active material layer includes a negative electrode active material, a binder holding the negative electrode active material, and a negative electrode additive including copper oxide, and the negative electrode active material includes a negative electrode active material including an amorphous carbon.

The negative electrode 32 includes a negative current collector 32a and negative electrode mixture layers 32b formed on at least one side, preferably both sides of the negative current collector 32a. In addition, in the present invention, a negative electrode is also described as a negative electrode. Moreover, in the description of the negative electrode, the negative electrode current collector is also simply referred to as a current collector.

The negative current collector 32a is formed of any material that is highly conductive and does not alloy with lithium ions. One end of the negative current collector 32a is provided with a portion 32c that is not covered with the negative electrode mixture layer 32b (hereinafter referred to as "negative current collector exposed portion"). The negative current collector exposed portion 32c is provided on the end face 3b of the wound group 3 and in the vicinity thereof. The negative current collector exposed portion 32c faces and is electrically connected to the negative connection end 22 of the negative collector plate 24.

A portion of the negative electrode 32 to which the negative electrode mixture layer 32b is applied is larger in the width direction than the portion of the positive electrode 34 to which the positive electrode mixture layer 34b is applied. Thereby the portion to which the positive electrode mixture layer 34b is applied is preferably sandwiched between the portions to which the negative electrode mixture layer 32b is applied. In one preferred mode, the positive current collector exposed portion 34c and the negative current collector exposed portion 32c are respectively bundled at the flat portion and connected by welding or the like. The separators 33 and 35 are wider in the width direction than the portion to which the negative electrode mixture layers 32b are applied. However, since the ends of the positive current collector exposed portion 34c and the negative current collector exposed portion 32c are wound at positions where the current collectors are exposed, there is no problem when bundling and welding.

The negative electrode mixture layer 32b includes a negative electrode active material, and may further include at least one, preferably both of a negative electrode additive and a binder.

An embodiment of the negative electrode active material includes a negative electrode active material including graphite particles (A) and graphite particles (B) on which amorphous carbon fine particles are supported. Further, another embodiment of the negative electrode active material includes a negative electrode active material containing amorphous carbon.

The graphite particles constituting the graphite particles (A) and the graphite particles (B) on which the amorphous carbon fine particles are supported include particles of natural graphite and particles of artificial graphite, and the particles of the natural graphite are preferable. Examples of the natural graphite include scaly graphite, lumpy graphite, and soil graphite. The graphite particles (A) and the graphite particles constituting the graphite particles (B) on which the amorphous carbon fine particles are supported may be particles of the same kind of graphite or particles of different kind of graphite.

Examples of the negative electrode active material other than graphite include carbon-based materials such as non-graphitizable carbon (hard carbon) and graphitizable carbon (soft carbon).

As for the graphite, a surface of a graphite coated with an amorphous carbon may be used. Coating with the amorphous carbon can prevent reaction with excess electrolyte. An example of the amorphous carbon includes a pitch. That is, the graphite particles constituting the graphite particles (A) and the graphite particles (B) on which the amorphous carbon fine particles are supported are preferably particles of graphite coated with amorphous carbon, and more preferably particles of pitch-coated graphite. In addition, it is one of particularly preferred embodiments that the graphite particles constituting the graphite particles (A) and the graphite particles (B) on which the amorphous carbon fine particles are supported are particles of a natural graphite coated with an amorphous carbon.

Examples of the supported amorphous carbon fine particles constituting the graphite particles (B) on which the amorphous carbon fine particles are supported include carbon blacks such as acetylene black, Ketjen black, channel black, furnace black, lamp black, and thermal black. Incidentally, the supported amorphous carbon microparticles mean amorphous carbon scattered on the surface of the graphite particles, and are different from the aforementioned coating. The coating means covering all or part of the surface of the graphite particles as a plane.

The graphite particles (B) on which the amorphous carbon fine particles are supported have the number of an amorphous carbon fine particle per unit area of 0.4 pieces/µm² or more, preferably 0.4 to 2.4 pieces/µm², and more preferably 0.8 to 2.0 pieces/µm². In this embodiment, when the graphite particles support a small amount of the amorphous carbon fine particles, that is, graphite particles supporting the amorphous carbon fine particles do not fall under the above (B) when the number of the amorphous carbon fine particles per unit area is less than 0.4 pieces/µm². Graphite particles supporting the amorphous carbon fine particles having the number of the amorphous carbon fine particles per unit area of less than 0.4 pieces/µm² may be used as the graphite particles (A).

The average particle diameter of the graphite particles (A) is preferably 4 um or more and 12 um or less, and more preferably 5 um or more and 10 um or less.

The average particle diameter of the graphite particles (B) on which the amorphous carbon fine particles are supported is preferably 4 um or more and 12 um or less, more preferably 5 um or more and 10 um or less. The average particle diameter of the graphite particles (A) and the average particle diameter of the graphite particles (B) on which the amorphous carbon fine particles are supported may be the same or different.

As the supported amorphous carbon fine particles constituting the graphite particles (B) on which the amorphous carbon fine particles are supported, the average particle diameter thereof is preferably smaller than the average particle diameter of the graphite particles (A) and the average particle diameter of the graphite particles constituting the graphite particles (B) on which the amorphous carbon fine particles are supported. The average particle diameter of the amorphous carbon fine particles is preferably 0.05 um or more and 0.5 um or less, and more preferably 0.1 um or more and 0.4 um or less.

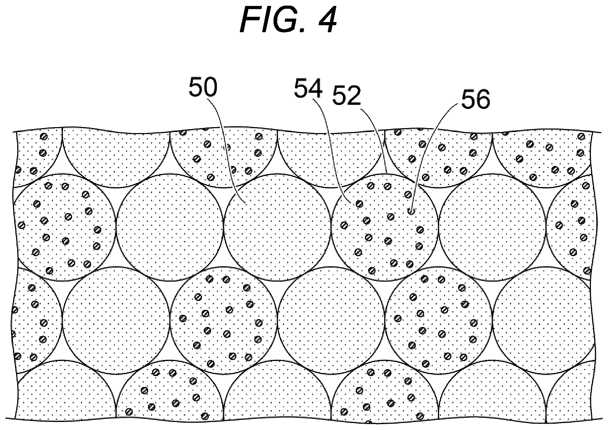

As the negative electrode active material including the graphite particles (A) and the graphite particles (B) on which the amorphous carbon fine particles are supported, for example, as shown in Figure 4, the graphite particles (A) 50 and the graphite particles (B) 52 on which the amorphous carbon fine particles are supported (the amorphous carbon fine particles 56 are supported on the graphite particles 54) are preferably present in the negative electrode active material layer in a mixed state. In Figure 4, components constituting the negative electrode active material layer other than (A) and (B) are omitted.

When the negative electrode active material includes the graphite particles (A) and the graphite particles (B) on which amorphous carbon fine particles are supported, the mass ratio (graphite particles (A) / graphite particles (B) on which amorphous carbon fine particles are supported) is preferably 0.25 or higher and 5 or lower, and more preferably 0.5 or higher and 2 or lower.

When a negative electrode active material containing amorphous carbon is included as the negative electrode active material, it is one of preferred embodiments that the negative electrode active material containing amorphous carbon contains the graphite particles (B) on which the amorphous carbon fine particles are supported.

Further, for example, as a part of the negative electrode active material, a material may be used as the graphite material, the material being obtained by mixing carbon black such as acetylene black, Ketjen black, channel black, furnace black, lamp black and thermal black as a conductive auxiliary agent, and a material obtained by mixing the conductive auxiliary agent with the graphite material and then coating with an amorphous carbon and compounding the same, and obtained by mixing non-graphitizable carbon (hard carbon) and graphitizable carbon (soft carbon) with graphite. The shape of the negative electrode active material is not particularly limited, and may have, for example, a spherical shape, a scaly shape, a fibrous shape, or a shape obtained by pulverizing them.

As a result of extensive studies by the present inventors, it has been found that a lithium ion secondary battery can reduce the internal resistance in a wide range from a low SOC region to a high SOC region while securing the capacity of the battery, and thus has high power and good storage properties by using a negative electrode active material containing graphite particles (A) and graphite particles (B) on which amorphous carbon fine particles are supported.

Also, as a result of extensive studies by the present inventors, it has been found that the lithium-ion secondary battery can reduce internal resistance in a wide range from a low SOC region to a high SOC region while ensuring battery capacity, so that it has high output and good storage properties by the negative electrode active material including the negative electrode active material containing the amorphous carbon, and the negative electrode active material layer including the negative electrode active material, the binder having the negative electrode active material, and a negative electrode additive containing copper oxide.

Further, it is preferable that the negative electrode active material layer includes copper oxide. When the negative electrode active material layer has the copper oxide in an 0.5 wt% or more and 15 wt% or less with respect to the total 100 wt% of the negative electrode active material and the copper oxide, it is more preferable that the negative electrode active material layer has the copper oxide in an amount of 0.5 wt% or more, so that the lithium ion secondary battery can reduce the internal resistance in a wide range from the low SOC region to the high SOC region while securing the capacity of the battery, and therefore, it is preferable that the negative electrode active material layer has high power and good storage properties.

The copper oxide is included as a negative electrode additive. The copper oxide may be copper oxide (I) (Cu₂O), copper oxide (II) (CuO), or mixtures thereof. That is, the copper oxide may be at least one type of copper oxide selected from Cu₂O and CuO. The negative electrode additive may be particulate. The shape of the particulate negative electrode additive is not particularly limited, and may have, for example, a spherical shape, a scaly shape, a fibrous shape, or a shape obtained by pulverizing them. The particulate negative electrode additive may be particles containing copper oxide (I) (Cu₂O), copper oxide (II) (CuO), or mixtures thereof, or may be particles consisting essentially of copper oxide (I) (Cu₂O), copper oxide (II) (CuO), or mixtures thereof. These various particulate negative electrode additives may be used singly or in combination.

In the negative electrode mixture layer 32b, the negative electrode active material and the negative electrode additive may be present as separate particles that are not combined with each other. Accordingly, the negative electrode active materials can be electrically connected to each other without being inhibited by the negative electrode additive having high electrical resistance, and an increase in the internal resistance of the lithium ion secondary battery can be suppressed. The negative electrode additive may have an average particle diameter smaller than the average particle diameter of the negative electrode active material, and may have an average particle diameter of 1 to 10 um. Accordingly, the negative electrode active materials can be electrically connected to each other without being inhibited by the negative electrode additive having high electrical resistance, and thus an increase in the internal resistance of the lithium ion secondary battery can be suppressed. The average particle diameter of the negative electrode active material and the negative electrode additive is determined based on SEM observed images.

As the binder of the negative electrode mixture layer 32b, the same materials as those exemplified as those that can be used as the binder of the positive electrode mixture layer 34b can be used.

The negative electrode material mixture 32b may further include a dispersant. As the dispersant, carboxymethylcellulose (CMC) can be used.

The negative electrode 32 can be formed as follows, for example. First, a negative electrode active material, a negative electrode additive containing copper oxide, a binder, and optionally a dispersant are prepared. The negative electrode active material and the negative electrode additive may be in a particulate form. The negative electrode active material and the negative electrode additive may be separate particles that are not combined with each other. The negative electrode active material, the negative electrode additive and the binder, and optionally the dispersant are dispersed in solvents (e.g., N-methyl-2-pyrrolidone (NMP), water) to prepare pasty or slurry-like mixtures. The prepared mixture is applied to the surface (one side or both sides) of the negative current collector 32a, dried, and optionally subjected to calendering to form a negative electrode mixture layer 32b. Thereby, the negative electrode 32 is obtained. However, the negative electrode is not limited to those manufactured by the above-described manufacturing method, and may be manufactured by another method.

The separators 33 and 35 have an insulating function of preventing a short circuit between the positive electrode 34 and the negative electrode 32, and a function of holding a nonaqueous electrolyte. As the separators 33 and 35, for example, a porous sheet made of a resin such as polyethylene (PE), polypropylene (PP), polyester, cellulose, or polyamide, or a laminated sheet thereof (for example, a sheet having a three-layer structure of PP/PE/PP) can be used.

A layer including an inorganic material (e.g., alumina particles) and a binder may be provided on one or both surfaces of the separators 33 and 35. Thus, even when the lithium ion secondary battery 100 is used in an abnormal state (for example, when the temperature of the lithium ion secondary battery rises to 160 °C or higher due to overcharge, crushing or the like), the separators 33 and 35 are prevented from melting and the insulating function can be maintained. Therefore, the safety of the lithium ion secondary battery 100 is improved.

If necessary, a shaft core (not shown) may be disposed on the innermost circumference of the wound group 3. As the shaft core, a resin sheet or the like having higher bending rigidity than any of the positive electrode current collector, negative current collector, and separators 33 and 35 can be used.

Optionally, an insulating protective film (not shown) may be wound around the wound group 3. The insulating protective film is formed of one sheet or a plurality of film members made of a synthetic resin such as PP (polypropylene), and has such a length that it can be wound around the direction parallel to the flat surface of the wound group 3 and perpendicular to the winding axis direction.

### [Examples]

Hereinafter, the present invention will be described in detail with reference to Examples, but the present invention is not limited to these Examples.

### [Examples 1 to 11 and Comparative Examples 1 to 4]

Li_{1.0}Ni_{0.33}Co_{0.33}Mn_{0.33}O₂ powder was prepared as a positive electrode active material, acetylene black as a conductive auxiliary agent, and polyvinylidene fluoride (PVdF) as a binder was prepared.

The positive electrode active material, the conductive agent and the binder were mixed in a weight ratio of 90 : 5 : 5. N-methyl-2-pyrrolidone (NMP) was added to the resulting mixture to adjust the viscosity to obtain a positive electrode slurry.

An aluminum foil having a thickness of 15 um was prepared as a positive current collector. A layer of the positive electrode slurry was formed by simultaneously applying two layers (front surface and back surface) using the positive electrode slurry by a slot die coating method while leaving an uncoated portion which becomes a welded portion (positive current collector exposed portion 34c) on both surfaces of the positive current collector. Next, a layer of the positive electrode slurry was dried and pressed to form a positive electrode mixture layer 34b, and a positive electrode 34 shown in Figure 3 was produced.

Pitch coated natural graphite particles (negative electrode active material A) as a negative electrode active material, pitch coated natural graphite particles (negative electrode active material B) on which amorphous carbon fine particles are supported, and copper oxide (I) (Cu₂O) particles (negative electrode additive C) as a negative electrode additive, styrene-butadiene rubber (SBR) as a binder, and carboxymethyl cellulose (CMC) as a dispersant were prepared. However, the negative electrode active material A used in Example 2 supports a small amount of amorphous carbon fine particles, and the negative electrode active material A used in Comparative Example 4 supports amorphous carbon fine particles.

The negative electrode active material A, the negative electrode active material B, the negative electrode additive C, the binder, and the dispersant were mixed so that the total of the negative electrode active material A, the negative electrode active material B, and the negative electrode additive C: binder: dispersant was in a weight ratio of 100 : 1 : 1. The amounts (total 100 wt%) and specifications of the negative electrode active material A, the negative electrode active material B, and the negative electrode additive C are shown in Table 1. The copper oxide (I) particles used as the negative electrode additive C are simply referred to as Cu₂O in Table 1. Deionized water was added to the obtained mixture to adjust the viscosity, and a negative electrode slurry was obtained.

A layer of the negative electrode slurry was formed by simultaneously applying two layers (front and back surfaces) using the negative electrode slurry by a slot die coating method while leaving an uncoated portion which becomes a welded portion (negative current collector exposed portion 32c) on both surfaces of a copper foil having a thickness of 10 um. Next, a layer of the negative electrode slurry was dried and pressed to form a negative electrode mixture layer 32b, and a negative electrode 32 shown in Figure 3 was produced.

Subsequently, the separators 33 and 35 were sandwiched between the prepared positive electrode 34 and the negative electrode 32, and the wound group 3 was prepared with the configuration as shown in Figure 3. The positive connection end 42 and the negative connection end 22 of the positive collector plate 44 and the negative collector plate 24 connected to the battery lid 6 and the uncoated portion (positive current collector exposed portion 34c and negative current collector exposed portion 32c) of the wound group 3 were welded, the wound group 3 was covered with an insulating protective film, and the battery can 1 was sealed, and the battery lid 6 and the battery can 1 were welded (refer to Figure 1 and Figure 2).

Subsequently, an electrolyte solution was prepared as a non-aqueous electrolyte, in which LiPF₆ was dissolved at a 1.0 mol/L in a solvent obtained by mixing ethylene carbonate (EC) and dimethyl carbonate (DMC) in a volume ratio of 1 : 2. The prepared electrolytic solution was injected from the liquid injection port 9, and then sealed with an liquid injection plug 11 to prepare a lithium ion secondary battery.

After the lithium ion secondary battery was initialized by charging and discharging, the battery capacity, the DC resistance (DCR) in SOC, and a capacity retention rate after storage were measured.

### <Battery Capacity>

Battery capacity was obtained in the following way. A constant voltage-constant current charging (CC-CV charging) was performed at the charging current 1 C for a total of 2.5 hours until the battery voltage becomes 4.2 V. And a constant current discharge (CC discharge) was carried out in the discharge current 0.02 C up to the pressure 2.9 V after 30 minutes of pause, and an initial capacitance was obtained. Table 1 shows the initial capacities (relative values) of the lithium ion secondary batteries of the respective Examples and Comparative Examples normalized to the initial capacity of the lithium ion secondary battery of Comparative Example 1 as 100.

### <DCR>

The relationship between SOC and open circuit voltage (OCV) was obtained by using the voltage after discharging the battery capacity from 4.2 V in increments of 5 % of the battery capacity and pausing for 2 hours as an OCV, and the relationship with the SOC was obtained.

A DCR at SOC 25%, which is a low SOC region, was obtained as follows. First, the CC-CV charging was performed at a charging current of 1 C from SOC 0% to SOC 25% by using the SOC-OCV relationship. Next, the lithium ion secondary battery was held in a constant temperature bath at -10 °C for 5 hours. Thereafter, the lithium ion secondary battery was discharged at a constant current of 5 C for 10 seconds, and the voltage drop value due to discharge was measured. Further, similar constant current discharge was performed at discharge currents of 10 C and 15 C. Then, the discharge current was plotted on the horizontal axis and the voltage drop value was plotted on the vertical axis, and the slope of the graph was defined as the DCR. Table 1 shows the DCRs (relative values) of the lithium ion secondary batteries of the respective Examples and Comparative Examples normalized with the DCR of the lithium ion secondary battery of Comparative Example 1 as 100. The smaller the DCR value at SOC 25%, the lower the internal resistance of the lithium ion secondary battery in the low SOC region.

A DCR at SOC 75%, which is a high SOC region, was obtained as follows. First, the CC-CV charging was performed at a charging current of 1C from SOC 0% to SOC 75% by using the SOC-OCV relationship. Next, the lithium ion secondary battery was held in the constant temperature bath at -10 °C for 5 hours. Thereafter, the lithium ion secondary battery was discharged at a constant current of 5 C for 10 seconds, and the voltage drop value due to discharge was measured. Further, similar constant current discharge was performed at discharge currents of 10 C and 15 C. The discharge current was plotted on the horizontal axis and the voltage drop value was plotted on the vertical axis, and the slope of the graph was defined as the DCR. Table 1 shows the DCRs (relative values) of the lithium ion secondary batteries of the respective Examples and Comparative Examples normalized with the DCR of the lithium ion secondary battery of Comparative Example 1 as 100. The smaller the DCR value at SOC 75%, the lower the internal resistance of the lithium ion secondary battery in the high SOC region.

### <Capacity Retention Rate After Storage>

The relationship between the SOC and an open circuit voltage (OCV) was obtained by discharging the battery capacity from 4.2 V in increments of 5 % of the battery capacity, taking the voltage after resting for 2 hours as the OCV, and obtaining the relationship with the SOC.

The CC-CV charging was performed at a charging current of 1 C from SOC 0% to SOC 80% by using the relationship of SOC-OCV. Then, after controlling the temperature of the constant temperature bath to 70 °C and holding it for 30 days, a constant current discharge (CC discharge) was performed at a discharge current of 1 C to the battery voltage of 2.9 V, and then until the battery voltage reached 4.2 V. The constant voltage-constant current charging (CC-CV charging) was performed at a charging current of 1 C for a total of 2.5 hours. After resting for 30 minutes, the constant current discharge (CC discharge) was performed at the discharge current of 0.02 C to the battery voltage of 2.9 V to obtain a capacity after storage (a post-storage capacity). (Post-storage capacity) / (initial capacity) × 100 was calculated as a capacity retention rate after the storage. Table 1 shows the capacity retention rates (relative values) of the lithium ion secondary batteries of the respective Examples and Comparative Examples normalized to the capacity retention rate of the lithium ion secondary battery of Comparative Example 1 as 100.

Table 1 shows the composition of the negative electrode active material, the negative electrode additive and the above evaluation result of each lithium ion secondary battery of Examples and Comparative Examples. From Table 1, it was suggested that in the Examples to which the present application is applied, it is possible to achieve both DCR reduction in the low SOC region and high SOC region and storage capacity retention rate while ensuring the battery capacity. On the other hand, in the Comparative Examples, either the reduction in the DCR or the storage capacity retention rate was poor, and both could not be achieved.

By adopting the above-described configuration as a negative electrode for the lithium ion secondary battery, it is possible to provide the lithium ion secondary battery having a high output in a wide range of low to high SOC and also having good storage characteristics.

### [Table 1]

**Table 1**

| | Negative Electrode Active Material A (wt%) | Negative Electrode Active Material A Number of Supported Amorphous Carbon Fine Particles Per Unit Area (pcs./µm²) | Negative Electrode Active Material B (wt%) | Negative Electrode Active Material B Number of Supported Amorphous Carbon Fine Particles Per Unit Area (pcs./µm²) | Particle Diameter of Supported Amorphous Carbon Fine Particles (µm) | Negative Electrode Active Material A Particle Diameter (µm) | Negative Electrode Active Material B Particle Diameter (µm) | Cu₂O (wt$) | Capacity | -10 °C, DCR (10 seconds) | | Capacity Retention Rate after Storage (70°C for 30 days, SOC 80%) |
|---|---|---|---|---|---|---|---|---|---|---|---|---|
| | | | | | | | | | | SOC 25% | SOC 75$ | |
| Example 1 | 50 | 0 | 50 | 1.8 | 0.2 | 7 | 7 | 0 | 99 | 71 | 84 | 94 |
| Example 2 | 40 | 0.2 | 60 | 1.8 | 0.2 | 7 | 7 | 0 | 98 | 67 | 82 | 92 |
| Example 3 | 33 | 0 | 67 | 1.8 | 0.2 | 7 | 7 | 0 | 98 | 67 | 82 | 92 |
| Example 4 | 67 | 0 | 33 | 1.8 | 0.2 | 7 | 7 | 0 | 100 | 82 | 90 | 96 |
| Example 5 | 50 | 0 | 50 | 1.8 | 0.05 | 7 | 7 | 0 | 98 | 65 | 79 | 91 |
| Example 6 | 50 | 0 | 50 | 1.8 | 0.5 | 7 | 7 | 0 | 100 | 84 | 90 | 95 |
| Example 7 | 50 | 0 | 50 | 1.8 | 0.2 | 4 | 4 | 0 | 98 | 64 | 79 | 91 |
| Example 8 | 50 | 0 | 50 | 1.8 | 0.2 | 12 | 12 | 0 | 103 | 83 | 90 | 95 |
| Example 9 | 49.75 | 0 | 49.75 | 1.8 | 0.2 | 7 | 7 | 0.5 | 98 | 70 | 84 | 94 |
| Example 10 | 49.25 | 0 | 49.25 | 1.8 | 0.2 | 7 | 7 | 1.5 | 97 | 67 | 84 | 94 |
| Example 11 | 42.5 | 0 | 42.5 | 1.8 | 0.2 | 7 | 7 | 15 | 80 | 62 | 86 | 94 |
| Comparative Example 1 | 100 | 0 | 0 | 0 | - | 7 | 7 | 0 | 100 | 100 | 100 | 100 |
| Comparative Example 2 | 0 | 0 | 100 | 0.9 | 0.2 | 7 | 7 | 0 | 99 | 69 | 84 | 89 |
| Comparative Example 3 | 0 | 0 | 100 | 1.2 | 0.2 | 7 | 7 | 0 | 98 | 66 | 82 | 87 |
| Comparative Example 4 | 50 | 0.6 | 50 | 1.8 | 0.2 | 7 | 7 | 0 | 98 | 66 | 82 | 87 |

One skilled in the art can use the above description to utilize the present disclosure to its fullest extent. The claims and embodiments disclosed herein are to be construed as merely illustrative and exemplary, and not limiting the scope of the disclosure in any way. With the aid of this disclosure, changes can be made in the details of the above embodiments without departing from the underlying principles of this disclosure. In other words, various modifications and improvements of the embodiments specifically disclosed in the above specification are within the scope of this disclosure.

The upper and/or lower limits of the numerical ranges described in the present specification can be combined arbitrarily to define a preferred range. For example, a preferred range can be defined by arbitrarily combining the upper and lower limits of the numerical range, a preferred range can be defined by arbitrarily combining the upper limits of the numerical ranges, and a preferred range can be defined by arbitrarily combining the lower limits of the numerical ranges.

It should be understood that throughout the present specification, expressions in the singular also include the concept of the plural unless specifically stated otherwise. Thus, it should be understood that articles in the singular (e.g., "a," "an," "the," etc. in the English language) include their plural concepts as well, unless specifically stated otherwise.

All publications, patents and patent applications cited herein are hereby incorporated by reference in their entirety.

### Reference Signs List

- 1: battery can
- 1a: opening
- 1b: wide side surface
- 1c: narrow side surface
- 1d: bottom surface
- 3: wound group
- 5: gasket
- 6: battery lid
- 7: insulation plate
- 9: liquid injection port
- 10: gas discharge valve
- 11: liquid injection plug
- 12: negative external terminal
- 12a: negative connection part
- 14: positive external terminal
- 14a: positive connection part
- 21: negative current collector plate base
- 22: negative connection end
- 23: negative electrode side opening
- 24: negative collector plate
- 26: negative electrode side through hole
- 32: negative electrode
- 32a: negative current collector
- 32b: negative electrode mixture layer
- 32c: negative current collector exposed portion
- 33: separator
- 34: positive electrode
- 34a: positive current collector
- 34b: positive electrode mixture layer
- 34c: positive current collector exposed portion
- 35: separator
- 41: positive current collector plate base
- 42: positive connection end
- 43: positive electrode side opening
- 44: positive collector plate
- 46: positive electrode side through hole
- 50: graphite particles (A)
- 52: graphite particles (B) on which amorphous carbon fine particles are supported
- 54: graphite particles
- 56: amorphous carbon fine particles
- 100: lithium ion secondary battery

## Claims

1. A lithium ion secondary battery comprising:
a positive electrode; and
a negative electrode,
wherein the negative electrode includes a current collector and a negative electrode active material layer disposed on at least one side of the current collector,
the negative electrode active material layer includes a negative electrode active material including graphite particles (A) and graphite particles (B) on which amorphous carbon fine particles are supported, and
the number of the amorphous carbon fine particles per unit area is 0.4 pieces/µm² or more in the graphite particles (B) on which the amorphous carbon fine particles are supported.

2. The lithium ion secondary battery according to claim 1,
wherein an average particle diameter of the amorphous carbon fine particles is smaller than an average particle diameter of the graphite particles (A) and an average particle diameter of the graphite particles constituting the graphite particles (B) on which the amorphous carbon fine particles are supported.

3. The lithium ion secondary battery according to claim 1 or 2,
wherein an average particle diameter of the amorphous carbon fine particles is 0.05 um or more and 0.5 um or less, and
an average particle diameter of the graphite particles (A) and an average particle diameter of the graphite particles (B) on which the amorphous carbon fine particles are supported are each independently 4 um or more and 12 um or less.

4. The lithium ion secondary battery according to any one of claims 1 to 3,
wherein the negative electrode active material layer includes a copper oxide.

5. The lithium ion secondary battery according to claim 4,
wherein the copper oxide is at least one copper oxide selected from Cu₂O and CuO.

6. The lithium ion secondary battery according to any one of claims 1 to 5,
wherein the graphite particles (A) and the graphite particles constituting the graphite particles (B) on which the amorphous carbon fine particles are supported are particles of a natural graphite.

7. The lithium ion secondary battery according to claim 4 or 5,
wherein the negative electrode active material layer includes the copper oxide in an 0.5 wt% or more and 15 wt% or less with respect to a total of 100 wt% of the negative electrode active material and the copper oxide.

8. The lithium ion secondary battery according to any one of claims 1 to 7,
wherein the graphite particles (A) and the graphite particles constituting the graphite particles (B) on which the amorphous carbon fine particles are supported are graphite particles coated with an amorphous carbon.

9. A lithium ion secondary battery comprising:
a positive electrode; and
a negative electrode,
wherein the negative electrode includes a current collector and a negative electrode active material layer disposed on at least one side of the current collector,
the negative electrode active material layer includes a negative electrode active material, a binder holding the negative electrode active material, and a negative electrode additive including a copper oxide, and
the negative electrode active material includes a negative electrode active material containing an amorphous carbon.

10. The lithium ion secondary battery according to claim 9,
wherein the negative electrode active material containing the amorphous carbon includes graphite particles (B) on which amorphous carbon fine particles are supported.

11. The lithium ion secondary battery according to claim 10,
wherein graphite particles constituting the graphite particles (B) on which the amorphous carbon fine particles are supported are graphite particles coated with an amorphous carbon.
